# EUROPEAN PATENT APPLICATION

(11) **EP 4 270 763 A1**
(43) Date of publication of application: **01.11.2023**
(21) Application number: 21910190.4
(22) Date of filing: 02.12.2021
(51) Int. Cl.: H02M 7/12

(54) **POWER CONVERSION CONTROL DEVICE**

(30) Priority: 22.12.2020 JP 2020211940
(71) Applicant: Panasonic Intellectual Property Management Co., Ltd., Kadoma-shi, Osaka 571-0057 (JP)
(72) Inventor: DOYAMA, Yoshiaki, Kadoma-shi, Osaka 571-0057 (JP); KYOGOKU, Akihiro, Kadoma-shi, Osaka 571-0057 (JP); NAKAYAMA, Hiroaki, Kadoma-shi, Osaka 571-0057 (JP); NITTA, Takehiko, Kadoma-shi, Osaka 571-0057 (JP); ZUL, Hafizi, Kadoma-shi, Osaka 571-0057 (JP); NAKAMOTO, Yoshinao, Kadoma-shi, Osaka 571-0057 (JP)
(74) Representative: Eisenführ Speiser
(86) International application number: PCT/JP2021/044188
(87) International publication number: WO 2022/138038

(57) **Abstract**

Semiconductor switch (204R) is provided to electrically connect inductor (203R) to a DC midpoint potential terminal via inductor (203R), from an output of each phase of three-phase AC power supply (201). Positive-side diode (205R) and negative-side diode (206R) are provided to electrically connect inductor (203R) to the DC positive potential terminal and to the DC negative potential terminal, respectively, to supply power to the DC side. On and off control of semiconductor switch (204R) is performed in such a manner that the current from the three-phase AC power supply has a similar waveform as the voltage of the same phase. When the polarity of the output voltage of three-phase AC power supply (201) does not match the polarity of a short-time average voltage over a period of the on and off control, at a connection point between inductor (203R) and semiconductor switch (204R), the same voltage is added to ideal voltages of respective phases.

## Description

### TECHNICAL FIELD

The present disclosure relates to a power conversion control device that rectifies an alternating-current (AC) power supply into direct current (DC), and that uses the DC to drive a motor at a variable speed.

### BACKGROUND ART

PTL 1 discloses a three-phase rectifier that unidirectionally converts three-phase AC power into DC power.

This three-phase rectifier includes three sets of bidirectional switching circuits each of which includes a semiconductor switching element connected between DC output terminals of a corresponding single-phase rectifier circuit that includes four diodes connected in a single-phase bridge connection. The three-phase rectifier also includes three AC-side inductors each of which is connected between one of AC input terminals of corresponding one of the three sets of bidirectional switching circuits, and corresponding one of three output terminals of the three-phase AC power supply. The three-phase rectifier also includes: three positive-side diodes each of which has an anode connected to a positive-side DC output terminal of corresponding one of the three sets of bidirectional switching circuits and a cathode connected to a positive-side DC bus, and three negative-side diodes each of which has a cathode connected to a negative-side DC output terminal of the corresponding one of the three sets of bidirectional switching circuits and an anode connected to a negative-side DC bus. The three-phase rectifier also includes a smoothing capacitor in which two capacitors are connected in series between the positive-side DC bus and the negative-side DC bus, and a midpoint terminal is connected to the other ones of the AC input terminals of the three sets of bidirectional switching circuits. The three-phase rectifier also includes a control circuit that controls the semiconductor switching elements included in the respective three sets of bidirectional switching circuits.

### Citation List

### Patent Literature

PTL 1: Unexamined Japanese Patent Publication No. H9-182441

### SUMMARY OF THE INVENTION

The present disclosure provides a power conversion control device that unidirectionally converts three-phase AC power into DC power, and can reduce a distortion in the waveform of the AC-side current, even when a high-inductance inductor is used to achieve a smoother input current.

A power conversion control device according to the present disclosure includes a semiconductor circuit group that includes a plurality of semiconductor circuits each of which includes: an inductor connected to an output side of a three-phase AC power supply; a semiconductor switch that electrically connects the inductor to a DC midpoint potential terminal; and a plurality of diodes that supply power to a DC side by electrically connecting the inductor to a DC positive potential terminal, or the inductor to a DC negative potential terminal, and the power conversion control device also includes a controller that controls an on-to-off ratio of the semiconductor switch. The semiconductor circuit group converts AC power into DC power by causing each of the plurality of semiconductor circuits to selectively pass the current of corresponding phase of the three-phase AC power supply from the corresponding output of the three-phase AC power supply to the DC positive potential terminal, to the DC negative potential terminal, or to the DC midpoint potential terminal, via the inductor, using a semiconductor switch and a plurality of diodes. The controller calculates an ideal voltage at a connection point between the plurality of diodes and the semiconductor switch in each of the plurality of semiconductor circuits in such a manner that a waveform of the current from the three-phase AC power supply to corresponding one of the plurality of semiconductor circuits is in a waveform similar to a waveform of the voltage of the three-phase AC power supply, controls an on-to-off ratio of the semiconductor switch based on an absolute value of the ideal voltage so as to bring a short-time average voltage at the connection point to the ideal voltage, and, when the polarity of the output voltage of the three-phase AC power supply and the polarity of the ideal voltage at the connection point do not match, performs a process of changing the polarity of the short-time average voltage to zero or to the same polarity as the polarity of the output voltage of the three-phase AC power supply, by adding a same voltage-equivalent value to the ideal voltages of the respective phases.

### BRIEF DESCRIPTION OF THE DRAWINGS

Fig. 1 is a control block diagram illustrating a processing sequence of control of a power conversion control device according to a first exemplary embodiment of the present disclosure.
Fig. 2 is a circuit block diagram illustrating an overall configuration of the power conversion control device according to the first exemplary embodiment.
Fig. 3 is a circuit block diagram illustrating a configuration of a part of the power conversion control device according to the first exemplary embodiment.
Fig. 4 is a waveform chart of the power conversion control device according to the first exemplary embodiment, in which (a) illustrates a waveform of a power supply voltage of an R-phase, (b) illustrates a waveform of a node potential of the same R phase, (c) illustrates a waveform of the node potential of the same S phase, and (d) illustrates a waveform of a node-potential of the same T phase.
Fig. 5 is a waveform chart of the power conversion control device according to the first exemplary embodiment, in which (a) illustrates the waveform of a power supply voltage of an R-phase, (b) illustrates another waveform of the node potential of the same R phase, (c) illustrates another waveform of the node potential of the same S phase, and (d) illustrates another waveform of a node-potential of the same T phase.
Fig. 6 is a control block diagram illustrating a processing sequence of control of the power conversion control device according to a second exemplary embodiment of the present disclosure.
Fig. 7 s a waveform chart of the power conversion control device according to the second exemplary embodiment, in which (a) illustrates a waveform of a power supply voltage of an R-phase, (b) illustrates a waveform of a node potential of the same R phase, (c) illustrates a waveform of the node potential of the same S phase, and (d) illustrates a waveform of a node-potential of the same T phase.
Fig. 8 is a control block diagram illustrating a processing sequence of control of the power conversion control device according to a third exemplary embodiment of the present disclosure.
Fig. 9 is a circuit block diagram illustrating a configuration of a power supply phase estimation unit in the power conversion control device according to the third exemplary embodiment.
Fig. 10 is a waveform chart illustrating an operation of the power supply phase estimation unit in the power conversion control device according to the third exemplary embodiment.
Fig. 11 is a waveform chart illustrating another operation of the power supply phase estimation unit in the power conversion control device according to the third exemplary embodiment.

### DESCRIPTION OF EMBODIMENTS

Some exemplary embodiments will now explained in detail with reference to the accompanying drawings. However, descriptions more in details than necessary are sometimes omitted. For example, detailed descriptions of already well-known matters and redundant descriptions of substantially the same configuration are sometimes omitted. This is to avoid an unnecessary redundancy in the following description and to facilitate understanding of those skilled in the art.

The accompanying drawings and the following description are only presented to help those skilled in the art fully understand the present disclosure, and are not intended to limit the subject matters described in the scope of claims.

### (First exemplary embodiment)

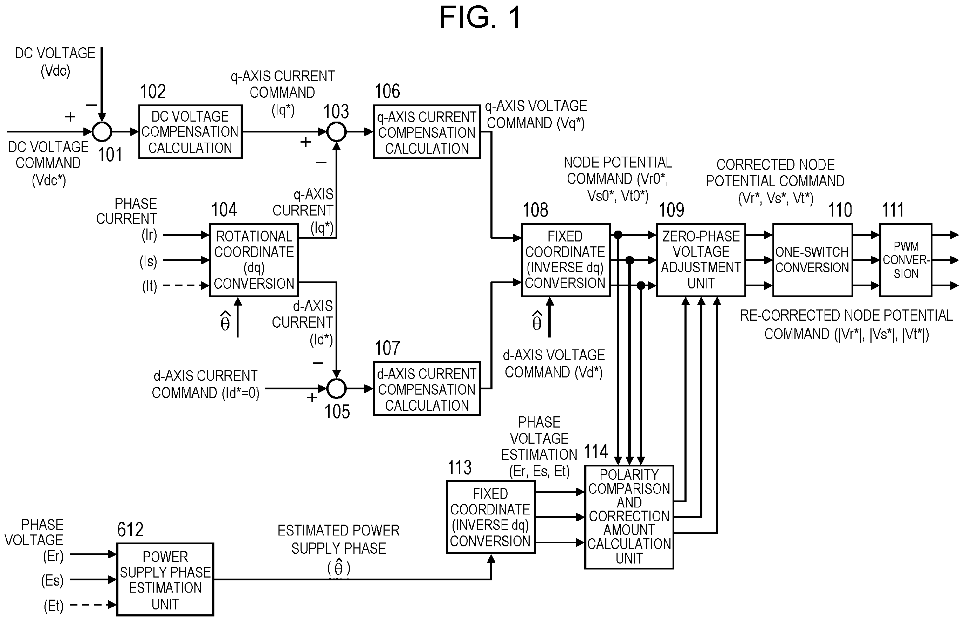

A first exemplary embodiment will now be explained with reference to Figs. 1 to 4.

### [1-1. Configuration]

### [1-1-1. Configuration of power conversion control device]

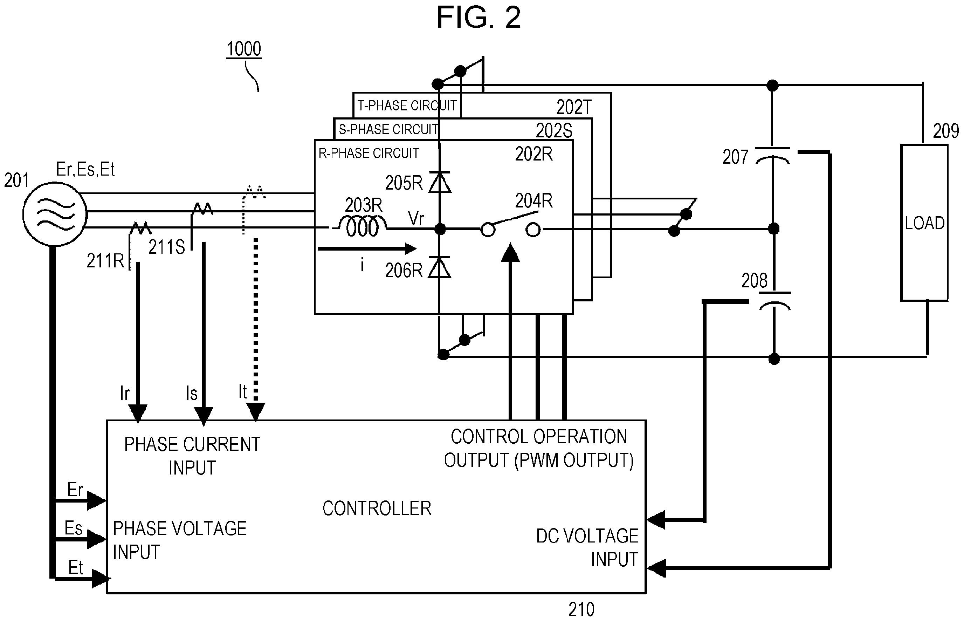

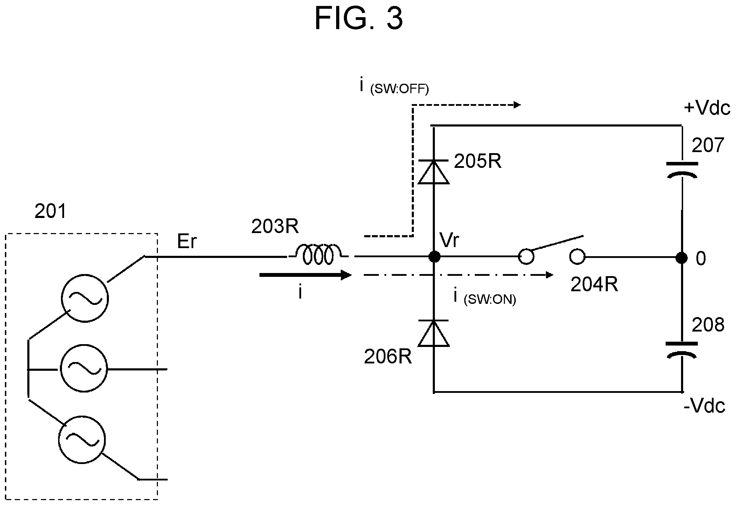

Fig. 2 is a block circuit diagram illustrating an overall configuration of a power conversion control device 1000 according to a first exemplary embodiment, and Fig. 3 is a block circuit diagram illustrating a configuration of a part of the power conversion control device according to the first exemplary embodiment.

Fig. 3 illustrates an R-phase output line, among the three output lines of three-phase AC power supply 201. The R-phase output line is connected to R-phase node Vr via inductor 203R. Positive-side diode 205R, negative-side diode 206R, and semiconductor switch 204R are connected to node Vr.

Positive-side diode 205R is configured to pass the current for charging positive-side smoothing capacitor 207. Negative-side diode 206R is configured to pass the current for charging negative-side smoothing capacitor 208.

Semiconductor switch 204R is connected to the midpoint between two smoothing capacitor 207 and smoothing capacitor 208.

A DC-side load is connected to a positive electrode of positive-side smoothing capacitor 207 and to the negative electrode of negative-side smoothing capacitor 208.

In other words, as illustrated in Fig. 3, power conversion control device 1000 includes first semiconductor circuit 202R (see Fig. 2) that is an R-phase circuit including: inductor 203R; semiconductor switch 204R, positive-side diode 205R, and negative-side diode 206R. Semiconductor switch 204R electrically connects inductor 203R to the DC midpoint potential terminal. Positive-side diode 205R electrically connects inductor 203R to the DC positive potential terminal, and negative-side diode 206R electrically connects inductor 203R to the DC negative potential terminal, to supply power to the DC side.

Specifically, when semiconductor switch 204R included in first semiconductor circuit 202R is switched on while the phase voltage (Er) is positive, the current flowing through inductor 203R increases in a direction flowing into the DC midpoint via semiconductor switch 204R.

When semiconductor switch 204R is then switched off, the current flows through node Vr into positive-side diode 205R that is connected to the DC positive side, and into the DC positive side (+ Vdc), because the current flowing through inductor 203R cannot change quickly.

By contrast, when semiconductor switch 204R is switched off while the phase voltage (Er) is negative and the direction of the current flowing through inductor 203R is the direction returning to three-phase AC power supply 201, the current flows from the DC negative side (-Vdc) into three-phase AC power supply 201, via negative-side diode 206R connected to the DC negative side, node Vr, and inductor 203R, because the current flowing through inductor 203R cannot change quickly.

As illustrated in Fig. 2, a plurality of semiconductor circuits that are first semiconductor circuit 202R that is an R-phase circuit, second semiconductor circuit 202S that is an S-phase circuit, and third semiconductor circuit 202T that is a T-phase circuit are provided as a semiconductor circuit group.

Each of second semiconductor circuit 202S that is an S-phase circuit and third semiconductor circuit 202T that is a T-phase circuit is also provided with an inductor, a semiconductor switch, a positive-side diode, and a negative-side diode, but are not illustrated in Fig. 2.

The semiconductor circuit group then converts AC power into DC power, by selectively applying the current from each one of the three outputs of three-phase AC power supply 201 to the DC positive potential terminal, the DC negative potential terminal, or the DC midpoint potential terminal, the current being applied via corresponding one of the inductors, using corresponding ones of the semiconductor switches, the positive-side diodes, and the negative-side diodes, among those of the respective phases.

In other words, detections of the power supply phase and the phase current of three-phase AC power supply 201, and a detection of the DC voltage output are input to controller 210, and controller 210 control to switch the semiconductor switches of the respective phases on or off.

As a result, it is possible to obtain a desired DC voltage, while achieving high power factor control by adjusting the waveform of the phase current to the same waveform as that of the power supply voltage.

Specifically, controller 210 is implemented as a microcomputer, for example. In addition to a central processing unit (CPU) that executes a control program, controller 210 includes an analog-to-digital converter (AD converter) and a timer that enables pulse-width modulation (PWM). A control method of controller 210 will be described later in detail.

### [1-1-2. Configuration of process of controller]

Fig. 1 is a control block diagram illustrating a processing sequence of control by controller 210 in Fig. 2.

In order to drive a DC load, a DC voltage command (Vdc^{∗}) is provided to control the DC voltage to a desired voltage. In addition, the actual DC voltage (Vdc) is detected, and comparator 101 obtains the difference between the DC voltage command (Vdc^{∗}) and the DC voltage (Vdc). Compensation calculation element 102 performs a calculations such as proportional-integral (PI) control for stabilizing and speeding up the DC voltage control to the obtained DC voltage difference. The result of the calculation of compensation calculation element 102 is obtained as a q-axis current command (Iq^{∗}).

The q-axis current command is a command for an active current component of the three-phase AC input, and the DC voltage can be adjusted by increasing or decreasing the q-axis current command. Because a d-axis current that is another axis is a reactive current component of the three-phase AC input, by making the d-axis current component zero, high-power-factor rectification can be achieved.

In other words, by controlling the actual q-axis current and the d-axis current orthogonal thereto appropriately, use of the AC power supply at a high-power factor becomes possible. The d-axis current and the q-axis current can be calculated by using an instantaneous current and an instantaneous power supply phase of the three-phase AC power supply.

In Fig. 1, rotational coordinate (dq) conversion processing block 104 obtains the d-axis current and the q-axis current from at least two of the phase currents, among the detected phase currents (Ir, Is, It) of the three-phase AC power supply, and an estimation (θ^) of the instantaneous power supply phase.

Comparator 103 compares obtained q-axis current (Iq) with current command (Iq^{∗}), and comparator 105 compares obtained d-axis current (Id) with current command (Id^{∗}). Q-axis current compensation calculation block 106 and d-axis current compensation calculation block 107 perform compensation calculations such as PI control for stabilizing and speeding up the current control, to the error of the q-axis current with respect to current command (Iq^{∗}) and to the error of the d-axis current with respect to the current command (Id^{∗}), respectively. The calculation results are then sent to fixed coordinate conversion (inverse dq conversion) unit 108, as node voltage commands.

Fixed coordinate conversion (inverse dq conversion) unit 108 obtains node voltage commands (Vr0^{∗}, Vs0^{∗}, Vt0^{∗}) for fixed coordinates (r/s/t axis), using the estimated instantaneous power supply phase (θ^). The obtained node voltage commands (Vr0^{∗}, Vs0^{∗}, Vt0^{∗}) are sent to zero-phase voltage adjustment unit 109, where a zero-phase voltage is added thereto, if necessary, to obtain corrected node voltage commands (Vr^{∗}, Vs^{∗}, Vt^{∗}).

A method of adjusting the zero-phase voltage will now be explained. Estimations of the phase voltages (Er, Es, Et) that are obtained by inputting the estimated power supply phase (θ^) to fixed coordinate (inverse dq) conversion unit 113, and the node potential commands (Vr0^{∗}, Vs0^{∗}, Vt0^{∗}) are sent to polarity comparison and correction amount calculation unit 114.

Polarity comparison and correction amount calculation unit 114 then inverts the polarity of a node potential command having a polarity not matching that of the estimated phase voltage, among the node potential commands (Vr0^{∗}, Vs0^{∗}, Vt0^{∗}) of the respective phases, and uses the resultant value as the zero-phase voltage for the phase to be adjusted.

By inputting the zero-phase voltage thus obtained to zero-phase voltage adjustment unit 109 to have the zero-phase voltage adjusted, the node potential command (Vr^{∗}, Vs^{∗}, Vt^{∗}) of the corresponding phase is brought to zero. In this manner, the polarity mismatch between the node potential command and the phase voltage or the phase current command is resolved.

One-switch conversion unit 110 then converts the corrected node voltage commands (Vr^{∗}, Vs^{∗}, Vt^{∗}) thus obtained into respective absolute values, to obtain re-corrected node potential commands (|Vr^{∗}|, |Vs^{∗}|, |Vt^{∗}|).

PWM converter 111 then PWM-converts the re-corrected node potential commands (|Vr^{∗}|, |Vs^{∗}|, |Vt^{∗}|), to cause the semiconductor switches included in the respective semiconductor circuits to be switched on or off. In this manner, it becomes possible to obtain a desired DC voltage, while maintaining a current waveform exerting a high power factor, so that the DC load can be driven appropriately.

### [1-2. Control operation and node-potential waveform]

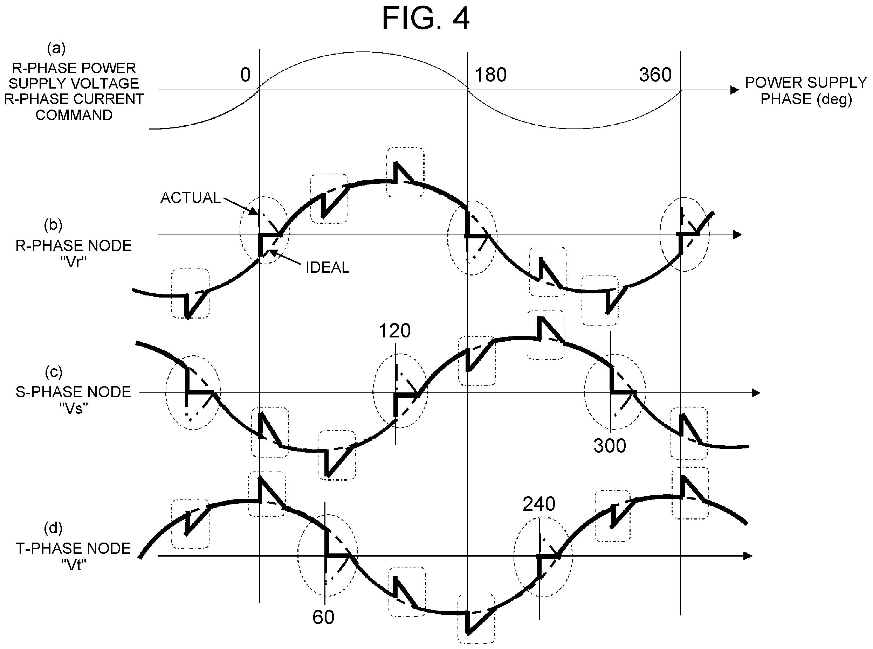

Fig. 4 is a waveform diagram illustrating a node-potential waveform generated as a result of the processing performed by controller 210, as illustrated in Fig. 1.

In waveform charts illustrated in Fig. 4, using the waveform of the R-phase power supply voltage illustrated in (a) as a reference, the point at which the R-phase voltage switches from zero to positive is established as a zero phase, and the point at which the R-phase voltage drops to zero and switches to negative is established as a 180-degree (deg.) phase.

In addition, because the waveform of the current of each of the phases is controlled to have the waveform of the power supply voltage of the corresponding phase, the power supply voltage being that at the same phase, the R-phase voltage and the R-phase current illustrated in (a) have the same waveform. Also for the S phase and the T phase, the phase voltage and the phase current have the same waveform. The phase current of the S phase is a sine wave delayed by 120 degrees from the phase current of the R phase, and the phase current of the T phase is a sine wave advanced by 120 degrees (or delayed by 240 degrees) from the phase current of the R phase. In Fig. 4, the waveforms of the phase voltage and of the phase current command are not illustrated for the S phase and the T phase.

A waveform at the node of each of the phases, the waveform being a result of the processing performed by controller 210, will now be explained.

For the current flowing through the inductor of each of the phases to be a sine wave having the same phase as the phase voltage, the delay in the current phase introduced by the inductance of the inductor needs to be eliminated. The node potential therefore has a phase delayed from that of the phase voltage.

The waveform in (b) of Fig. 4 illustrates a waveform of the node potential of the R phase. Assuming that the current can be passed from the node to the DC portion via any path, the phase of the waveform is delayed slightly from that of the phase voltage, as indicated by the broken line in the waveform immediately after 0° or immediately after 180°. If a node potential can be given in the manner described above, it is possible to synchronize the phase of the current passing through inductor 203R, that is, the phase current, to that of the phase voltage.

However, in intervals indicated with the broken line, the polarity of the node potential and the polarity of the phase voltage do not match. For this reason, it is not possible to achieve the ideal node-potential waveform as indicated with the broken line, and the waveform actually obtained will be as indicated with a dashed-dotted line. As a result, the node potential becomes greatly distorted.

In these intervals, the zero-phase voltage is therefore added to bring the node potential to zero. As a result, the node potential is brought to the level indicated with the thick solid line. In this manner, it becomes possible to reduce the distortion in the node potential.

At this time, because the same voltage is applied to the other phases, too, waveforms indicated with thick solid lines are achieved for the S phase and the T phase, respectively, as illustrated in (c) and (d), respectively, in Fig. 4.

For the S phase, immediately after the phases of 120 degrees and 300 degrees, there are intervals in which the polarity of the node potential and the polarity of the phase voltage do not match. In these intervals, the zero-phase voltage is therefore applied so as to bring the S-phase node potential to zero.

At this time, because the same voltage is applied to the R phase and the T phase, too, as surrounded by rectangular thin broken lines, the node potentials exhibit distorted waveforms, as indicated with the thick solid line.

Similarly, for the T phase, there are intervals in which the polarity of the phase voltage and the polarity of the node potential do not match, immediately after 60 degrees and 240 degrees. In these intervals, the zero-phase voltage is therefore applied so as to bring the T-phase node potential to zero.

At this time, because the same voltage is applied to the R phase and the S phase, too, as surrounded by rectangular thin broken lines, the node potentials exhibit distorted waveforms, as indicated with the thick solid lines.

Even with this, the inter-phase potentials remain as a three-phase sine wave. Therefore, there would be almost no distortion in the phase currents. As a result, a DC conversion operation with a high power factor can be achieved.

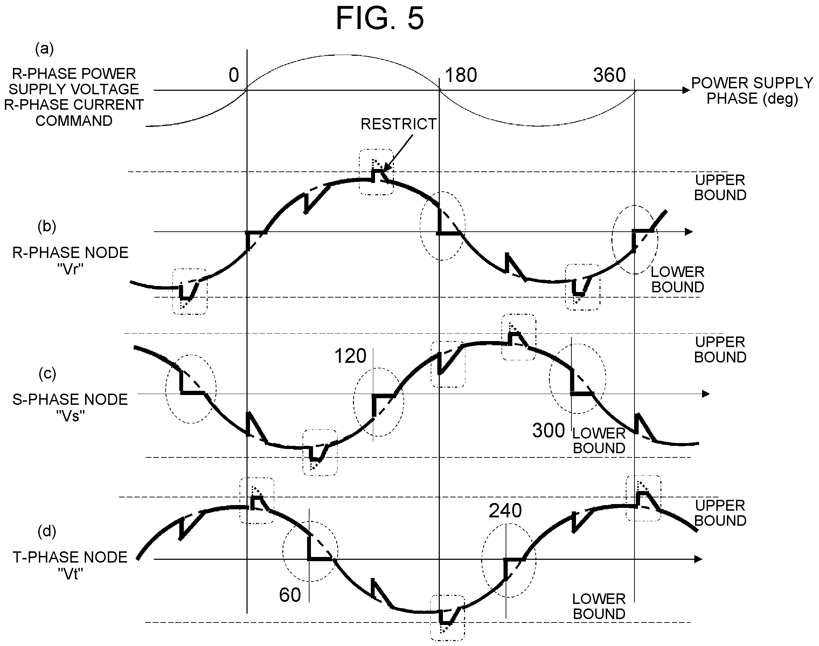

Fig. 5 is a waveform diagram illustrating a response to a node potential going outside of the range of the DC voltage, as a result of performing the processing according to the present disclosure.

The waveforms illustrated in Fig. 5 are similar to the waveforms illustrated in Fig. 4. The actual node potential needs to be within a range between the highest voltage (+ Vdc) and the lowest voltage (-Vdc) of the DC portion. Therefore, when the node potential of each of the phases goes outside this range, it is necessary to restrict the node potential.

For example, in the waveform (b) in Fig. 5, as a result of correcting the S-phase node potential to eliminate the polarity mismatch of the S phase near 120 degrees, the node potential of the R phase has risen to a level higher than an upper bound. Therefore, the R-phase node potential is restricted to the upper bound.

Similarly, around the area having passed 300 degrees, the R-phase node potential drops below a lower bound, so that the R-phase node potential is restricted to the lower bound. In addition, describing in terms of an on-width of the semiconductor switch, this restricting of the potential is equivalent to 0%, that is, equivalent to complete off. In other words, this potential restriction is also equivalent to electrically connecting to the diode, and also to changing a time ratio at which the semiconductor switch is kept on from 0% to 100%.

### [1-3. Effects and like]

As described above, in the power conversion control device according to the present exemplary embodiment, three-phase AC power supply 201 is connected to a positive-side diode that is connected to the positive side of the DC, a negative-side diode that is connected to the negative side of the DC, and a semiconductor switch connected between the positive-side diode and the DC midpoint, via an inductor, correspondingly to each of the phases. The power conversion control device then detects the phase currents, and switches the semiconductor switches on and off to obtain a desired current waveform. The power conversion control device also includes zero-phase voltage adjustment unit 109 to apply a zero-phase voltage, when the polarity of the average voltage at a connection point between the diode and the semiconductor switch does not match the polarity of the desired current waveform, to the average voltage at the connection point, so that the polarity mismatch is eliminated.

As a result, because the average voltage at the connection point comes to have the same polarity as that of the desired current waveform, the phase current flowing while the semiconductor switch is off has a polarity matching that of the desired current waveform.

Therefore, by switching the semiconductor switch on and off repeatedly, a highly accurate and high-power factor current waveform can be achieved.

With the power conversion control device according to the present disclosure, by applying a zero-phase voltage to an average node potential, it is made possible to pass the current to a desired diode while the semiconductor switch is off. Therefore, it is possible to achieve the node potential as expected, and to provide the power conversion control device in which the phase current is less distorted.

### (Second exemplary embodiment)

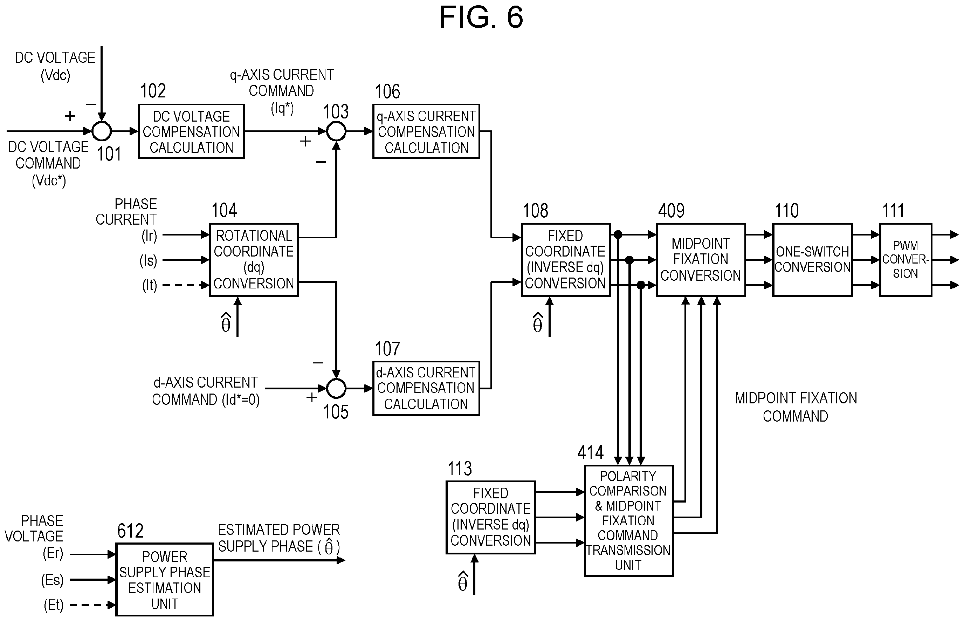

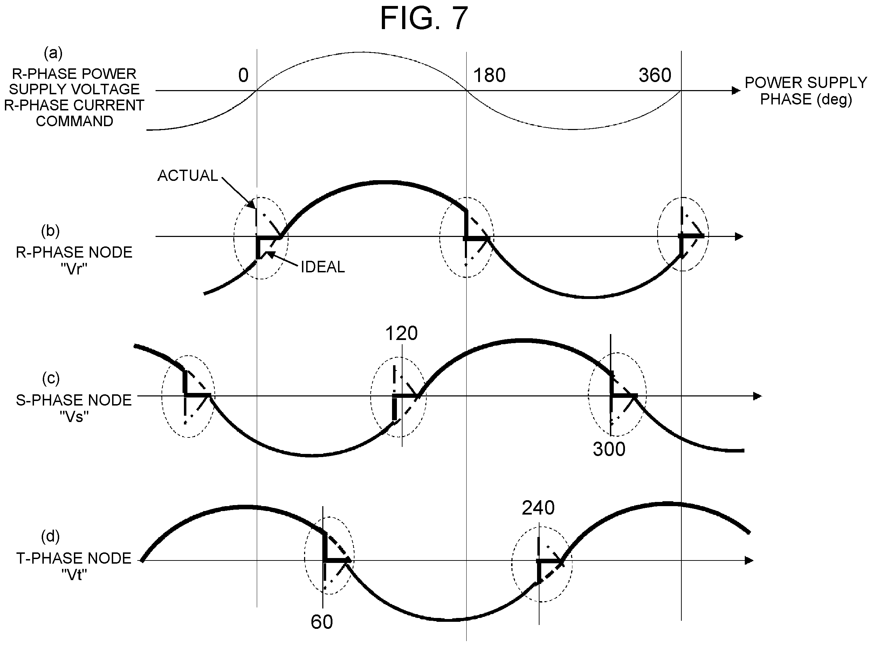

A second exemplary embodiment will now be explained with reference to Figs. 6 and 7.

### [2-1. Configuration]

### [2-1-1. Configuration of power conversion control device]

A configuration of the power conversion control device according to the second exemplary embodiment is the same as that in the first exemplary embodiment, but the process performed by controller 210 is different.

[2-1-2. Configuration of process of controller] Fig. 6 is a control block diagram illustrating process performed by controller 210 according to the second exemplary embodiment.

Basic control is the same as that according to the first exemplary embodiment illustrated in in Fig. 1. The difference is in a process of transmitting a polarity comparison and midpoint fixation command, the process being centered around polarity comparison and midpoint fixation command transmission unit 414.

Polarity comparison and midpoint fixation command transmission unit 414 is configured to, when the polarities of the phase voltage of the phase and the node potential are detected as not matching, fix the node potential to the midpoint potential.

The process will be now be explained with reference to the waveform diagram in Fig. 7.

### [2-2. Control operation and node-potential waveform]

Fig. 7 is a waveform diagram illustrating a node-potential waveform resultant of the process performed by controller 210, as illustrated in Fig. 6.

In Fig. 7, the point at which the R-phase voltage switches from zero to positive is established as the zero phase, and the point at which the R-phase voltage drops to zero and switches to negative is established as a 180-degree (deg.) phase, based on the waveform of the R-phase power supply voltage, in the same manner as illustrated in (a) of FIG. 4.

In addition, because the waveform of the current of each of the phases is controlled to have the waveform of the power supply voltage of the corresponding phase, the power supply voltage being that at the same phase, the R-phase voltage and the R-phase current illustrated in (a) have the same waveform. Also for the S phase and the T phase, the phase voltage and the phase current have the same waveform. The phase current of the S phase is a sine wave delayed by 120 degrees from the phase current of the R phase, and the phase current of the T phase is a sine wave advanced by 120 degrees (or delayed by 240 degrees) from the phase current of the R phase. In Fig. 7, the waveforms of the phase voltage and of the phase current command are not illustrated for the S phase and the T phase.

A waveform at the node of each of the phases, the waveform being a result of the processing performed by controller 210, will now be explained.

For the current flowing through the inductor of each of the phases to be a sine wave having the same phase as the phase voltage, the delay in the current phase introduced by the inductance of the inductor needs to be eliminated. The node potential therefore has a phase delayed from that of the phase voltage.

The waveform in (b) of Fig. 7 illustrates a waveform of the node potential of the R phase. Assuming that the current can be passed from the node to the DC portion via any path, the phase of the waveform is delayed slightly from that of the phase voltage, as indicated by the broken line in the waveform immediately after 0° or immediately after 180°.

If a node potential can be given in the manner described above, it is possible to synchronize the phase of the current passing through inductor 203R, that is, the phase current, to that of the phase voltage.

However, in intervals indicated with the broken line, the polarity of the node potential and the polarity of the phase voltage do not match. For this reason, it is not possible to achieve the ideal node-potential waveform as indicated with the broken line, and as a result, the node potential becomes greatly distorted.

In these intervals, the node potential of the phase is changed to zero. For example, immediately after 0 degrees, R-phase node potential "Vr" is brought to zero.

Also immediately after 180 degrees, the R-phase node potential "Vr" is brought to zero, in the same manner. In addition, S phase node potential "Vs" is brought to zero immediately after 120 degrees and 300 degrees, and T-phase node potential" Vt" is brought to zero immediately after 60 degrees and 240 degrees.

As a result, it is possible to improve a large distortion, such as that indicated in the alternate long and short dash line (see Fig. 7), that actually occurs, and it is possible to obtain a current waveform with less harmonics.

[2-3. Effects and the like] As described above, in the power conversion control device according to the present exemplary embodiment, three-phase AC power supply is connected to a positive-side diode that is connected to the positive side of the DC, a negative-side diode that is connected to the negative side of the DC, and a semiconductor switch connected between the positive-side diode and the DC midpoint, via an inductor, correspondingly to each of the phases. The power conversion control device then detects the phase currents, and switches the semiconductor switches on and off to obtain a desired current waveform. The power conversion control device also includes polarity comparison and midpoint fixation command transmission unit 414 configured to, when the polarity of the average voltage at a connection point between the diode and the semiconductor switch does not match the polarity of the desired current waveform, bring the average voltage of the corresponding phase to zero, so that the polarity mismatch is eliminated.

With this, through a processing sequence simpler than that in the first exemplary embodiment, it becomes possible to eliminate the polarity mismatch between the average voltage at the connection point and a desired current waveform. Therefore, the phase current flowing during the period in which the semiconductor switch is off has a polarity matching that of the desired current waveform.

Therefore, by switching the semiconductor switch on and off repeatedly, a high-power factor current waveform can be achieved.

### (Third exemplary embodiment)

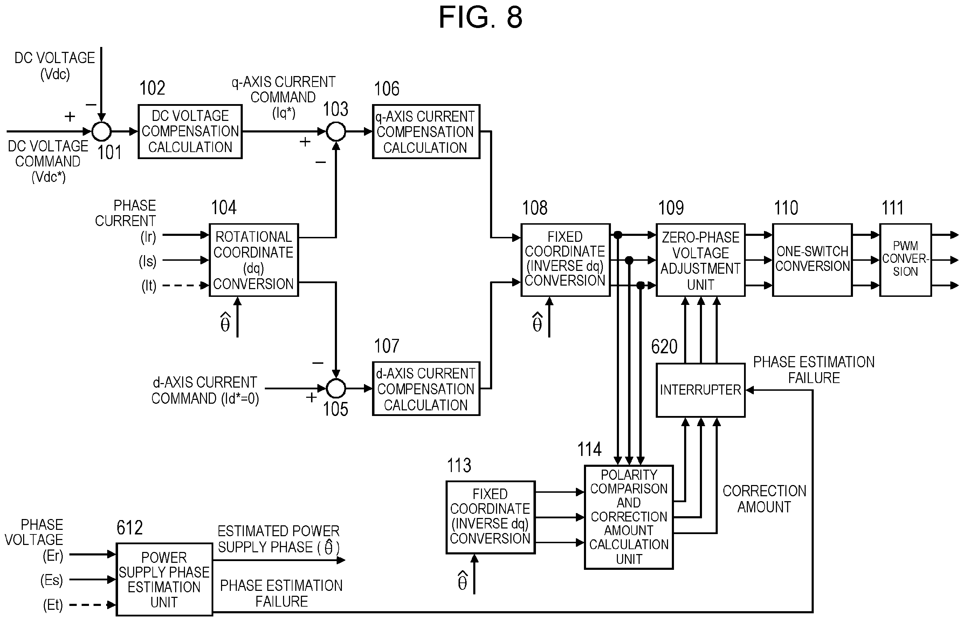

A third exemplary embodiment will now be explained with reference to FIGS. 8 to 11.

### [3-1. Configuration]

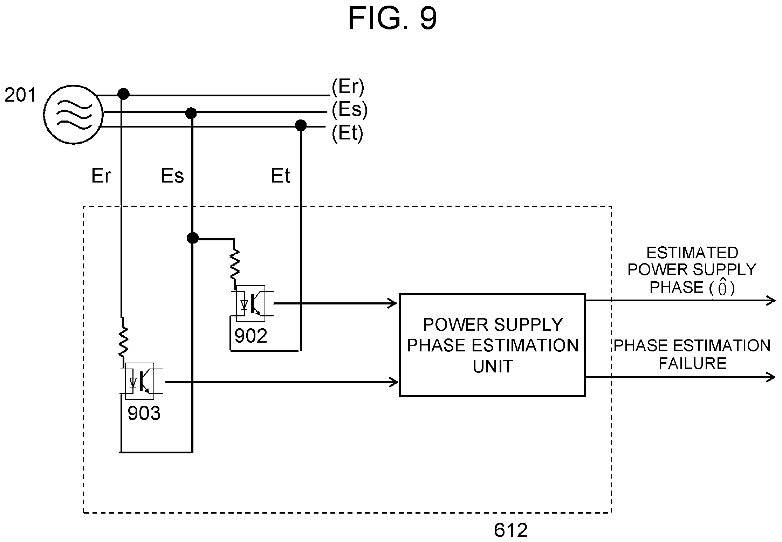

Fig. 9 is a circuit diagram illustrating an overall configuration of power supply phase estimation unit 612. Three-phase AC power supply 201 has an R phase, an S phase, and a T phase. A light emitting diodes (LED) on a primary side of photocoupler 903 is connected between the R phase and the S phase via a resistor, and an LED on a primary side of photocoupler 902 is connected between the S phase and the T phase via a resistor.

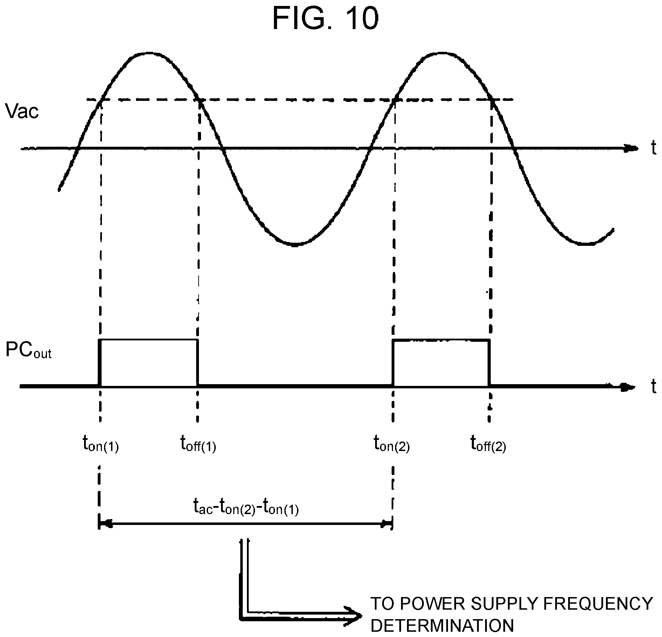

Power supply phase estimation unit 612 receives outputs of secondary-side phototransistors, and outputs power supply phase estimation result (θ^) and estimation failure information. Fig. 10 illustrates a waveform illustrating a relationship between a line voltage of the R phase with respect to the S phase of three-phase AC power supply 201, and the secondary-side output of photocoupler 903.

As illustrated in Fig. 10, when the AC-side voltage becomes equal to or higher than a certain level on the positive side, the secondary-side output of the photocoupler is set to a high level. This means the same thing as photocoupler 903 illustrated in Fig. 9 being ON.

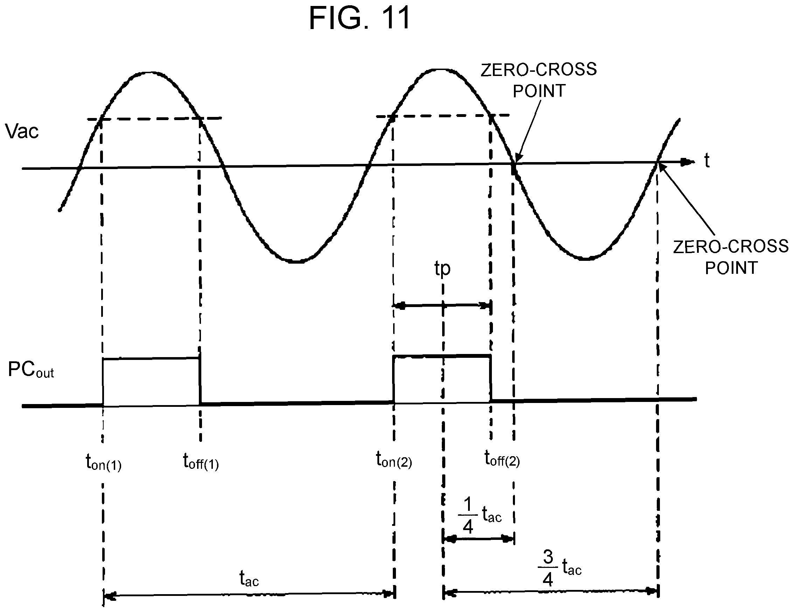

The high-level period varies depending on the threshold of the circuit. Because the primary side of photocoupler 903 is an LED, and current only flows unidirectionally through an LED, the high-level period is shorter than 180 degrees. As illustrated in Fig. 11, the period from one high level to the next high level is "tac" that is a cycle of the AC power supply.

The circuit threshold voltage for this binarization may be any voltage between a voltage closer to zero and the highest instantaneous AC voltage. Specifically, taking a fluctuation of the AC power supply voltage into consideration, the threshold voltage is preferably set equal to or lower than the highest AC instantaneous voltage, with the lowest voltage of the fluctuating power supply voltage.

Furthermore, as illustrated in Fig. 11, by obtaining a midpoint time between time "ton (2)" at which the output switches to the high level and the time "toff (2)" at which the output switches to the low level, that is, obtaining ("ton (2)" + "toff (2)")/2, it is possible to calculate the time at which the AC power supply voltage is highest, that is, the time of 90 degrees in a sine wave.

In the same manner, it is also possible to calculate zero-cross time of the power supply voltage from the same waveform diagram. The time of 0 degrees of the sine wave can be calculated by adding 3/4 of the period "tac" to the time of 90 degrees ("ton (2)" + "toff (2)")/2.

In other words, using this method, the time of any phase of the AC power supply can be calculated. Moreover, this method is not affected by the variation in the threshold level of the binarizing circuit.

If a sine-wave voltage stops being output, for example, the cyclicity of the on/off time of photocoupler 903 becomes disturbed; therefore, it can be detected that there is something wrong in the AC power supply.

Although the detailed circuit of the current control portion is omitted in Fig. 9, it is clear that the configuration of Fig. 2 may be used.

[3-2. Control operation] Fig. 8 is a control block diagram illustrating a control operation according to the third exemplary embodiment.

Many parts are the same as in Fig. 1, and the same blocks are denoted by the same numbers.

Power supply phase estimation unit 612 illustrated in Fig. 8 estimates the phase of the power supply, based on voltage information of the three-phase AC.

One example of a method of estimating the power supply phase include the following. A phase voltage is converted into a line voltage, and the line voltage is binarized. Using the period of the binarized signal as the cycle of the power supply, the amount by which the phase has advanced is calculated for each PWM cycle of semiconductor switch 204R. The time at the center of the high-level period of the binarized signal is established as the time corresponding to the 90-degree phase of the line voltage (or the time corresponding to 270 degrees).

Because the time corresponding to the 90-degree phase occurs at every power supply cycle, that is, occurs at a regular time interval, when an interval between the times of the 90-degree phase deviates from the regular time interval, it can be considered that there is something wrong in the phase estimation.

Possible examples of such a situation includes a situation in which the frequency of the power supply has changed quickly; a situation in which the phase of the power supply has jumped; and a situation in which the level of the phase voltage on which the binary signal is based has dropped greatly.

In the operation of fixing the node potential of the phase to the midpoint, semiconductor switch 204R is kept on for a long time. Therefore, if the operations according to the first exemplary embodiment and the second exemplary embodiment are performed in this condition, semiconductor switch 204R may be kept on for a time period longer than necessary.

If semiconductor switch 204R is kept on for a time period longer than necessary, the current flowing through semiconductor switch 204R may surge and damage semiconductor switch 204R. Therefore, it is necessary to ensure some margin in the current capacity of the semiconductor switch.

Therefore, in the third exemplary embodiment, when power supply phase estimation unit 612 fails to estimate the phase of the power supply voltage appropriately, the detection unit detects this failure, and interrupter 620 interrupts the zero-phase voltage that is to be corrected.

As a result, zero-phase voltage adjustment unit 109 is prevented from adjusting the zero-phase voltage, so that it becomes possible to avoid keeping semiconductor switch 204R on for a time period that is longer than necessary. Therefore, semiconductor switch 204R does not need to be provided with a current capacity larger than necessary.

### [3-3. Effects and the like]

As described above, in the present exemplary embodiment, when power supply phase estimation unit 612 fails to estimate the phase of the power supply voltage appropriately, the detection unit detects this failure. If it is detected that the power supply voltage phase estimation has not been performed appropriately, the process of maintaining the node potential of the phase at zero is interrupted. This is the process performed when the polarity of the phase voltage and the polarity of the node potential do not match, as described above in the first exemplary embodiment and the second exemplary embodiment.

As a result, it is possible to prevent the semiconductor switches from being kept on while the AC power supply is unstable, and it is thus possible to prevent damages of the semiconductor switches due to a current surge. In addition, because it is not necessary to adopt a semiconductor switch having a large current capacity, the size of the power conversion control device can be reduced.

Note that the third exemplary embodiment has been explained using the example that is based on the processing sequence according to the first exemplary embodiment, but it is clear that similar effects can be achieved by the processing sequence that is based on the processing sequence according to the second exemplary embodiment.

Note that the voltages detected by photocouplers 902 and 903 in the example illustrated in Fig. 9 are three-phase AC line voltages. In this example, the time at which the line voltage becomes 90 degrees is estimated, but because a constant phase relationship is maintained between the line voltage and the phase voltage, it is clear to those skilled in the art that conversion into the phase of the phase voltage can be easily achieved.

The exemplary embodiment described above is to exemplify the techniques in the present disclosure, and thus, various modifications, replacements, additions, omissions, and the like can be made in the scope of claims or in an equivalent scope thereof.

### INDUSTRIAL APPLICABILITY

The present disclosure is applicable to a conversion device including one semiconductor switch per phase, among devices that rectify a three-phase AC power supply at a high power factor and convert the three-phase AC power supply into DC.

### REFERENCE MARKS IN THE DRAWINGS

- 109: zero-phase voltage adjustment unit
- 114: polarity comparison and correction amount calculation unit
- 201: three-phase alternating current power supply
- 202R: first semiconductor circuit
- 202S: second semiconductor circuit
- 202T: third semiconductor circuit
- 203R: inductor
- 204R: semiconductor switch
- 205R: positive-side diode
- 206R: negative-side diode
- 207, 208: smoothing capacitor
- 210: controller
- 414: polarity comparison and midpoint fixation command transmission unit
- 612: power supply phase estimation unit
- 620: interrupter
- 902, 903: photocoupler
- 1000: power conversion control device

## Claims

1. A power conversion control device comprising:
a semiconductor circuit group that includes a plurality of semiconductor circuits each of which includes an inductor that is connected to an output side of a three-phase AC power supply, a semiconductor switch that electrically connects the inductor to a DC midpoint potential terminal, and a plurality of diodes that supply power to a DC side by electrically connecting the inductor to a DC positive potential terminal or electrically connecting the inductor to a DC negative potential terminal; and
a controller that controls on-to-off ratios of the respective semiconductor switches, wherein
the semiconductor circuit group converts AC power into DC power by causing each of the plurality of semiconductor circuits, corresponding to the respective phases of the three-phase AC power supply, to pass a current from corresponding one of three outputs of the three-phase AC power supply, selectively to the DC positive potential terminal, to the DC negative potential terminal, or to the DC midpoint potential terminal, via the inductor, using the corresponding semiconductor switch and the corresponding plurality of diodes, and
to bring a waveform of a current flowing out of the three-phase AC power supply to the plurality of respective semiconductor circuits to a waveform similar to a waveform of a voltage of the three-phase AC power supply, the controller is configured to calculate an ideal voltage at a connection point between the plurality of diodes and the semiconductor switch in each of the plurality of semiconductor circuits, to control an on-to-off ratio of the semiconductor switch based on an absolute value of the ideal voltage to bring a short-term average voltage at the connection point to the ideal voltage, and, when a polarity of corresponding one of output voltages of the three-phase AC power supply does not match a polarity of the ideal voltage at the connection point, to perform a process of changing a polarity of the short-time average voltage to zero or to a same polarity as the polarity of the output voltage of the three-phase AC power supply, by adding a same voltage-equivalent value to each of ideal voltages of the respective phases.

2. The power conversion control device according to Claim 1, wherein
the controller is configured, for each of the phases of the three-phase AC power supply,
to estimate or to detect voltage information and current information once in a fixed time period that is shorter than a cycle of the three-phase AC power supply,
to calculate the ideal voltage corresponding to the fixed time period at the connection point, based on the estimated or detected voltage information and the current information,
to determine an on-to-off ratio of the semiconductor switch with respect to the fixed time period, based on an absolute value of the ideal voltage, the on-to-off ratio being a ratio that brings an average voltage at the connection point over the fixed time period to the ideal voltage, and
to perform, when a polarity of a corresponding output voltage of the three-phase AC power supply does not match the polarity of the ideal voltage at the connection point, a process of adding or subtracting an on-time having a constant width to or from on-to-off ratios of the respective semiconductor switches in the plurality of respective semiconductor circuits, the process being a process for bringing the polarity of the average voltage at the connection point over the fixed time period to be zero or to be a same polarity as the polarity of the corresponding output voltage of the three-phase AC power supply.

3. The power conversion control device according to Claim 1, wherein, when the short-time average voltage at the connection point exceeds a positive potential or below a negative potential of the DC power, the short-time average voltage being resultant of adding or subtracting the on-time, the positive potential or the negative potential is used as a substitution of the ideal voltage of the corresponding phase.

4. The power conversion control device according to Claim 2, wherein, when the on-to-off ratio of the semiconductor switch is outside a width between 0% and 100%, the on-to-off ratio being resultant of adding the on-time, 0% or 100% is used as a substitution of the on-to-off ratio of the semiconductor switch.

5. A power conversion control device comprising:
a semiconductor circuit group that includes a plurality of semiconductor circuits each of which includes an inductor, a semiconductor switch that electrically connects the inductor to a DC midpoint potential terminal, and a plurality of diodes that supply power to a DC side by electrically connecting the inductor to a DC positive potential terminal and electrically connecting the inductor to a DC negative potential terminal, respectively; and
a controller that performs an on and off control of the semiconductor switch corresponding to each of the plurality of semiconductor circuits, the semiconductor switch being switched to bring corresponding one of currents from the AC power supply to corresponding one of the plurality of semiconductor circuits to have a waveform similar to a corresponding one of voltages of the AC power supply; wherein
each of the plurality of semiconductor circuits converts AC power into DC power, for corresponding one of the phases, by selectively passing a current from three outputs of the three-phase AC power supply, selectively to the DC positive potential terminal, to the DC negative potential terminal, or to the DC midpoint potential terminal, via the inductor, using the corresponding semiconductor switch and the corresponding plurality of diodes, and
when a polarity of the output voltage of the three-phase AC power supply does not match a polarity of the average voltage over a short time period of the on and off control, at the connection point between the corresponding plurality of diodes and semiconductor switch, the controller performs a process of setting 100% to the on-to-off ratio of the semiconductor switch of the corresponding phase.

6. The power conversion control device according to any one of Claims 1 to 5, further comprising:
a phase estimation unit that estimates a phase of the three-phase AC power supply by using an output voltage of the corresponding phase of the three-phase AC power supply; and
a detection unit that detects whether the phase estimated by the phase estimation unit is stable; wherein
while the detection unit is detecting that the estimated phase is not stable, the controller stops the process, the process which is to be performed when a polarity of the output voltage of the three-phase AC power supply does not match a polarity of a voltage between the inductor and the semiconductor circuit group.
